# EUROPEAN PATENT APPLICATION

(11) **EP 4 779 182 A1**
(43) Date of publication of application: **22.07.2026**
(21) Application number: 25225411.5
(22) Date of filing: 19.12.2025
(51) Int. Cl.: F16K 5/04, F16K 11/22

(54) **ROTARY VALVE**

(30) Priority: 16.01.2025 JP 2025006019
(71) Applicant: AISIN CORPORATION, Aichi 448-8650 (JP)
(72) Inventor: KATO, Hiroshi, Aichi 444-1192 (JP); KIHARA, Masao, Aichi 448-8650 (JP)
(74) Representative: Kramer Barske Schmidtchen Patentanwälte PartG mbB

(57) **Abstract**

Provided is a rotary valve that can secure sealing performance even when various types of materials are used for a seal. A rotary valve (2) includes: a housing (10) including a valve accommodation unit (11); a rotor (12) being housed rotatably about an axis (X) in the valve accommodation unit (11); and a sealing object (S) being disposed between an inner wall surface of the valve accommodation unit (11) and an outer wall surface of the rotor (12). A plurality of first flow path openings (11a) are formed in the inner wall surface and a plurality of second flow path openings (12c) that can communicate with the first flow path openings (11a) are formed in the outer wall surface (12s). In the sealing object (S), a first seal (21) is overlaid on a second seal (22), the first seal (21) including first seal openings (21a) that communicate with a plurality of the first flow path openings (11a) and being in contact with the inner wall surface, the second seal (22) including second seal openings that overlap with a plurality of the first seal openings (21a) and being in contact with the outer wall surface of the rotor (12), and the second seal (22) is divided into a plurality of pieces in a circumferential direction about the axis (X) and each of the pieces is supported unmovably with respect to the inner wall surface.

## Description

### TECHNICAL FIELD

This disclosure generally relates to a rotary valve.

### BACKGROUND DISCUSSION

US2022/0065356A (Reference 1) describes a rotary valve including a rotary component (50) that is rotatably disposed inside a bottomed cylindrical valve body (60), and a sealing element (20) disposed between an inner circumferential surface of the valve body (60) and an outer circumferential surface of the rotary component.

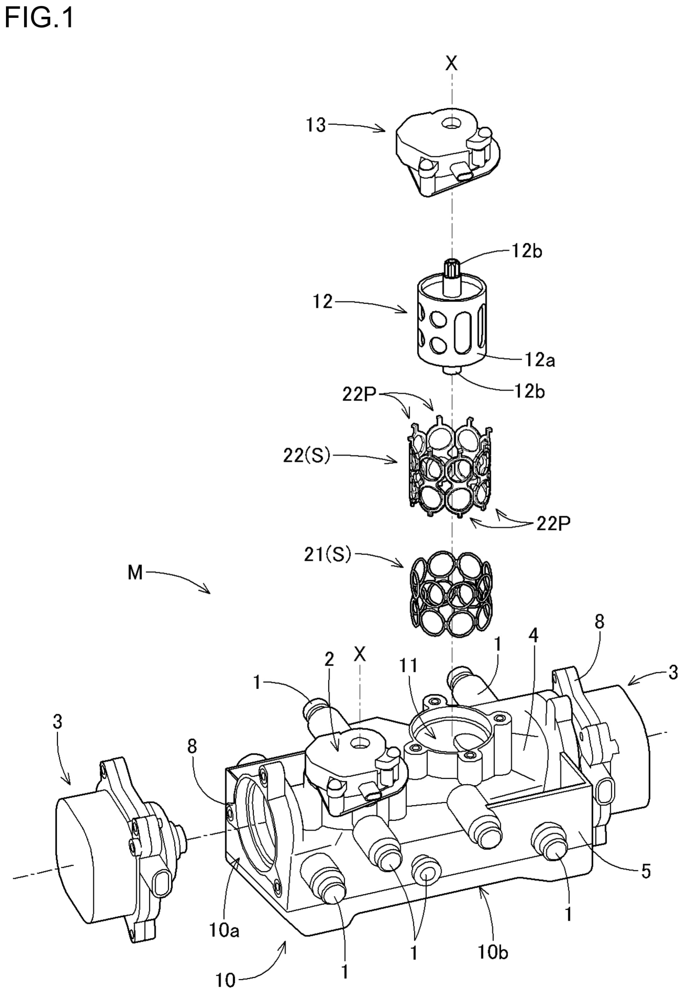

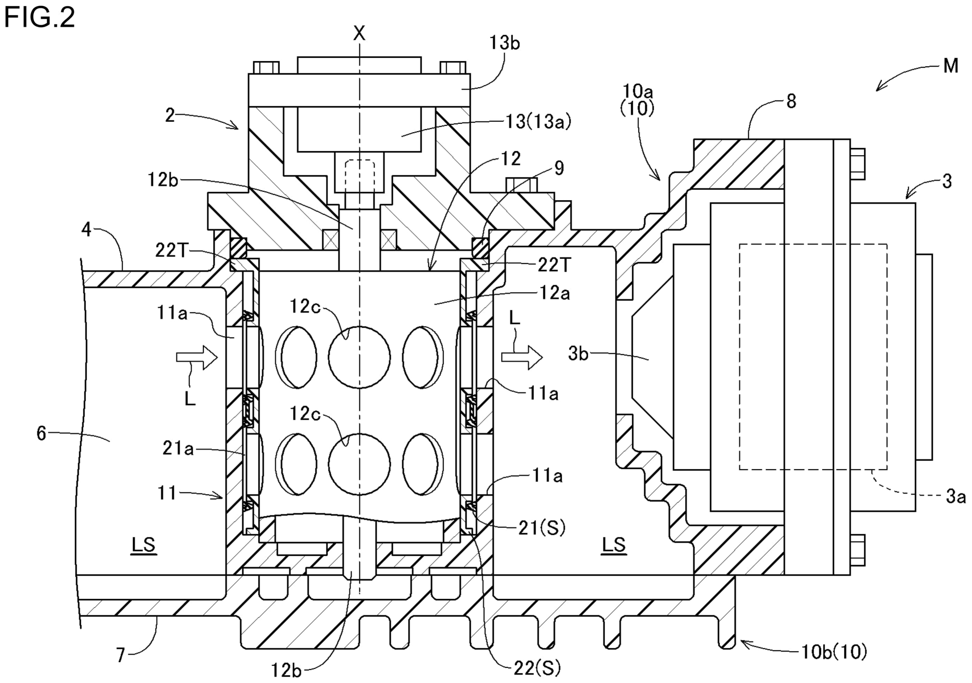

In the rotary valve according to Reference 1, fluid openings (181) are formed at a plurality of positions in an axial direction of the rotary component (50) (two positions in upper and lower positions in FIG. 1 and FIG. 2), and flow openings (24, 44) are formed at ends of the sealing element (20) in such a way as to be in alignment with each of the fluid openings (181).

Reference 1 describes that the sealing element (20) includes a first sealing structure (21) and a second sealing structure (22), the first sealing structure (21) and the second sealing structure (22) are respectively referred to as a rigid sealing structure and a soft sealing structure, and elastomer can be used as a material of the sealing element (20).

WO2024/146730A (Reference 2) describes a rotary valve (fluid control valve) in which a valve body (1) including a side wall (10) and a bottom wall (11) includes a cylindrical inner housing (12) and a rotary member (3) is housed in the inner housing (12). This rotary valve includes a cover (23) that covers an upper surface of the inner housing (12).

The rotary valve described in Reference 2 achieves, by setting a rotation angle of the rotary member (3), control of a fluid that flows between a plurality of orifices (A1, B1, C1, D1) or the like formed in the inner housing (12) and a plurality of openings (310, 320, 330) or the like formed in the rotary member (3), and secures sealing performance by inclusion of a seal (4) between an inner circumferential surface of the inner housing (12) and an outer circumferential surface of the rotary member (3).

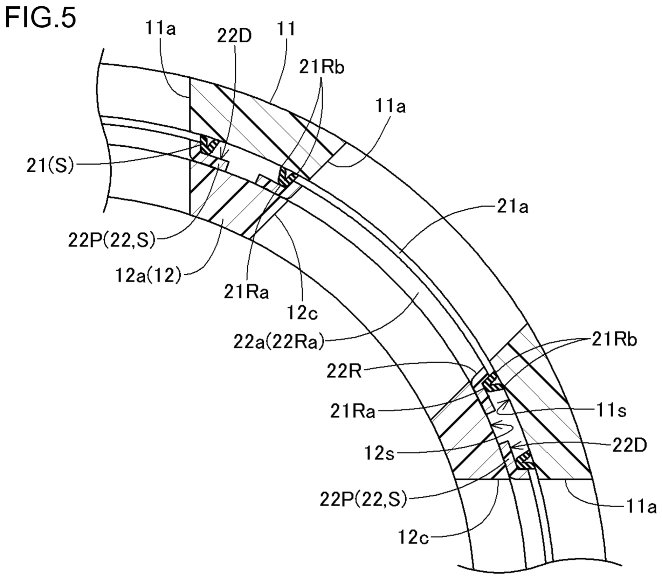

In the rotary valve according to Reference 2, the seal (4) is supported by a seal holder (2) located inside the inner housing (12), and as illustrated in FIG. 5, coatings (400) based on fluororesin are applied to protruding sections of the seal (4). Polytetrafluoroethylene (PTFE) is cited as an example of a material for the coatings (400).

The rotary valve has a structure in which a rotor is rotatably housed in a valve accommodation unit formed in a housing, and includes a seal, as described in each of Reference 1 and Reference 2, in order to prevent leakage of a refrigerant fluid from a section between an opening in an inner circumferential surface of the valve accommodation unit and an opening in an outer circumferential surface of the rotor.

The seal is supported by the housing and requires a material that is elastically deformable in such a way as to come into close contact with the outer circumferential surface of the rotor and has a small friction coefficient in such a way as to be smoothly slidable when the rotor rotates.

For example, in a rotary valve for controlling a flow of cooling water in an internal-combustion engine, relatively hot cooling water flows, and heat resistance of the seal is required. Therefore, there are cases in the past in which a flexible material having polytetrafluoroethylene (PTFE) coated on a surface thereof is used as a material for achieving good slidability and sufficient heat resistance as described in Reference 2.

However, since polytetrafluoroethylene (PTFE) is subject to PFAS restrictions, it is required to use a material that is not subject to the restrictions. Therefore, it is conceivable to use a material having a relatively low friction coefficient and relatively high heat resistance, such as nylon. However, since stiffness of nylon is high, even when the seal is disposed in the cylindrical valve accommodation unit, for example, in a deflected state, it is often difficult to bring the seal into close contact with the inner surface of the valve accommodation unit or the outer surface of the rotor housed in the valve accommodation unit, and it is conceivable that it may result in reducing the sealing performance. Thus, depending on the material to be used for the seal, desired sealing performance may not be secured.

A need thus exists for a rotary valve that can secure sealing performance even when various types of materials are used for the seal.

### SUMMARY

A rotary valve according to this disclosure includes: a housing in which a valve accommodation unit being cylindrical about an axis is formed; a rotor being housed rotatably about the axis in the valve accommodation unit; and a sealing object being disposed between an inner wall surface of the valve accommodation unit and an outer wall surface of the rotor. A plurality of first flow path openings are formed in the inner wall surface and a plurality of second flow path openings that can communicate with the first flow path openings are formed in the outer wall surface, the sealing object has a structure in which a first seal is overlaid on a second seal, the first seal including first seal openings that communicate with a plurality of the first flow path openings and being disposed in such a way as to be in contact with the inner wall surface, the second seal including second seal openings that overlap with the first seal openings and being disposed in such a way as to be in contact with the outer wall surface of the rotor, and the second seal is divided into a plurality of pieces in a circumferential direction about the axis and each of the pieces is supported unmovably with respect to the inner wall surface.

With this configuration, since the sealing object has a structure in which the first seal is overlaid on the second seal, for example, a material having a small friction coefficient may be used for the second seal and, for example, a material that can be sufficiently elastically deformed may be used for the first seal even when a friction coefficient of the material is not smaller than that of the material for the second seal. In this configuration, by elastically deforming and causing the first seal to come into close contact with the inner wall surface of the valve accommodation unit, the second seal can be brought into close contact with the outer wall surface of the rotor by using reaction force associated with this elastic deformation. In addition, in this configuration, the first seal and the second seal can be brought into close contact while keeping a state in which the first seal openings in the first seal communicate with the second seal openings in the second seal. In particular, since the second seal is divided into a plurality of pieces in the circumferential direction of the valve accommodation unit and each of the pieces is supported unmovably with respect to the inner wall surface of the valve accommodation unit, irrespective of the material used for the second seal, the second seal can be easily brought into close contact with the outer wall surface of the rotor, and it becomes easy to keep a state in which the first flow path openings in the valve accommodation unit communicate with the first seal openings in the first seal and the second seal openings in the pieces (the second seal). Therefore, even when various types of materials are used for the seal, a rotary valve that can secure sealing performance can be constructed.

### BRIEF DESCRIPTION OF THE DRAWINGS

The foregoing and additional features and characteristics of this disclosure will become more apparent from the following detailed description considered with the reference to the accompanying drawings, wherein:
FIG.1 is a perspective view of a manifold in which a rotary valve is illustrated in an exploded state;
FIG. 2 is a cross-sectional view of a section of the manifold where the rotary valve is located;
FIG. 3 is an exploded perspective view of a first seal, a second seal, a rotor, and the like;
FIG. 4 is a diagram illustrating a relation among the first seal, the second seal, and a valve accommodation unit;
FIG. 5 is a cross-sectional view of a section where the rotor, a sealing object, and the valve accommodation unit are in contact;
FIG. 6 is an enlarged view illustrating shapes of first seal openings in the first seal;
FIG. 7 is a cross-sectional diagram of the first seal illustrated in FIG. 6 taken along a line VII-VII;
FIG. 8 is an enlarged view illustrating shapes of second seal openings in a piece of the second seal; and
FIG. 9 is a cross-sectional diagram of the piece of the second seal illustrated in FIG. 8 taken along a line IX-IX.

### DETAILED DESCRIPTION

Embodiments of a rotary valve according to this disclosure will be described below based on the drawings. It should be noted that the rotary valve is not limited to those in the embodiments described below, and various variations may be made without departing from the spirit and the scope of this disclosure.

### [Basic configuration]

As illustrated in FIG. 1 and FIG. 2, a manifold M including a housing 10 is constructed, wherein the housing 10 includes a plurality of cylindrical ports 1, a pair of rotary valves 2, and a pair of pumps 3, and a flow path L (see FIG. 2) is formed in an inside space of the housing 10.

The manifold M is mounted in an electrically operated vehicle (which is not illustrated and may be referred to as an "electric vehicle" hereinafter) driven by electric power. The manifold M controls a flow of a refrigerant fluid among objects to be cooled (not illustrated) mounted in the electric vehicle, such as a battery, an inverter, and a motor for driving, and a heat dissipating unit (not illustrated), such as a radiator and a chiller.

The motor for driving is a drive source for driving that is operated when electric power is supplied. The inverter controls the electric power to be supplied to the motor for driving. As a battery, a secondary battery that can be charged and discharged is used, and when electric power from the battery is supplied by the inverter to the motor for driving, driving of the electric vehicle can be achieved.

The electric vehicles include a hybrid electric vehicle (HEV), a plug-in hybrid electric vehicle (PHEV), a battery electric vehicle (BEV), and a fuel cell electric vehicle (FCEV).

The manifold M constitutes a part of a temperature control unit (not illustrated). The temperature control unit includes a control unit (not illustrated), and the control unit acquires information from a sensor such as a battery temperature sensor (not illustrated) that measures a temperature of the battery or a fluid temperature sensor (not illustrated) that measures a temperature of the refrigerant fluid in the flow path L, supplies the refrigerant fluid to the objects to be cooled such as the battery, the inverter, and the motor for driving by controlling a pair of the rotary valves 2 and a pair of the pumps 3 individually, and keeps these objects at proper temperatures.

The refrigerant fluid is, for example, antifreeze the main ingredient of which is ethylene glycol or the like, cooling water such as a long life coolant (LLC), cooling water consisting of an insulating oil such as a paraffinic oil, or refrigerant such as hydrofluorocarbons (HFC) or hydrofluoroolefins (HFO).

### [Manifold]

The manifold M is mounted in the electric vehicle in an orientation as illustrated in FIG. 1 and FIG. 2. In the present embodiment, positional relations in the manifold M are described given that the manifold M is oriented as illustrated in FIG. 1 and FIG. 2. The housing 10 has a structure in which an upper housing 10a made of thermoplastic resin and a lower housing 10b made of thermoplastic resin are integrated by heat welding using infrared light.

As illustrated in FIG. 1 to FIG. 3, the upper housing 10a includes an upper wall 4 being an upper face and side walls 5 as well as a plurality of vertically oriented flow path walls 6 inside the upper wall 4 and the side walls 5. The lower housing 10b includes a bottom wall 7 to be disposed on a lower side, and the bottom wall 7 is heat-welded to lower ends of the side walls 5 and lower ends of the flow path walls 6 of the upper housing 10a.

The housing 10 includes a plurality of flow path chambers LS defined by the upper wall 4, the side walls 5, the flow path walls 6, and the bottom wall 7. The flow path chambers LS constitute a space for the refrigerant fluid to flow, and this space is referred to as a flow path L. Each of the flow path chambers LS communicates with a pre-selected one of the cylindrical port 1, the rotary valves 2, and the pumps 3.

The upper housing 10a is substantially rectangular in a plan view, and a plurality of the cylindrical ports 1 protrude outward with respect to the upper housing 10a when the upper housing 10a is oriented horizontally. The pumps 3 are connected to flanges 8 located at both ends in a longitudinal direction of the upper housing 10a in a plan view. As illustrated in FIG. 2, the pumps 3 have a structure in which an electric motor 3a and an impeller 3b are integrated into a single unit.

### [Rotary valve]

As illustrated in FIG. 1, the manifold M accommodates two rotary valves 2 on a lower side with respect to the upper wall 4 in a central region of the housing 10. The rotary valves 2 basically have a common configuration.

The rotary valve 2 includes a valve accommodation unit 11 that is formed integrally with the housing 10, a rotor 12 housed in the valve accommodation unit 11, a sealing object S, and a valve drive unit 13 that rotates and drives the rotor 12.

### [Rotary valve: valve accommodation unit]

As illustrated in FIG. 2, the valve accommodation unit 11 is cylindrical about a vertically oriented axis X and formed integrally with the housing 10. In the valve accommodation unit 11, a plurality of first flow path openings 11a, through which an inner wall surface 11s communicates with the flow path chamber LS, are formed. The valve accommodation unit 11 has an opening on an upper side with respect to the upper wall 4 of the housing 10, and by fixing the valve drive unit 13 to the upper wall 4, this opening is closed by the valve drive unit 13.

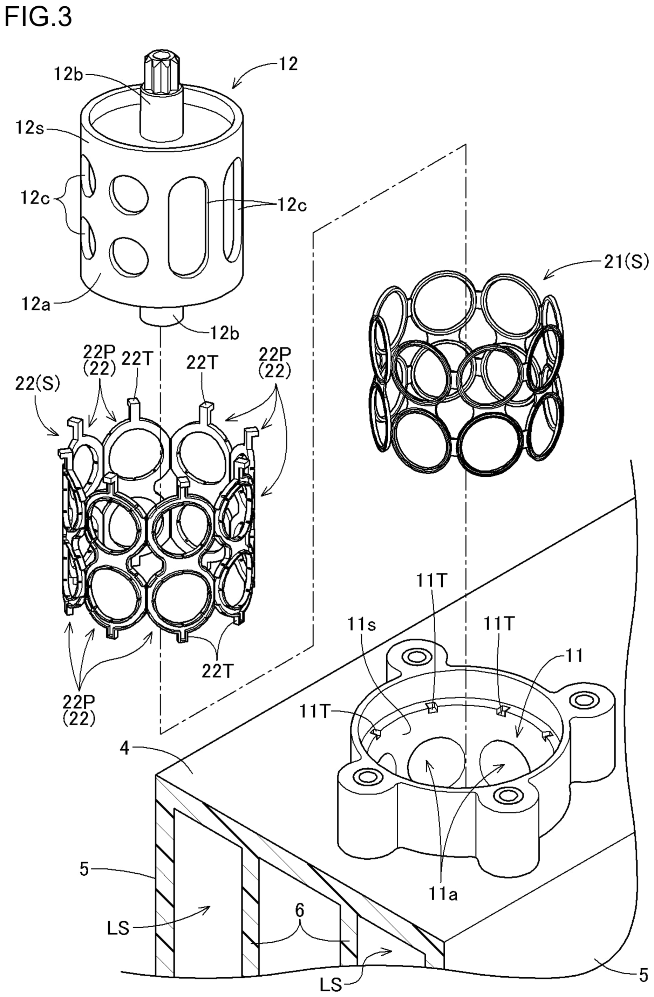

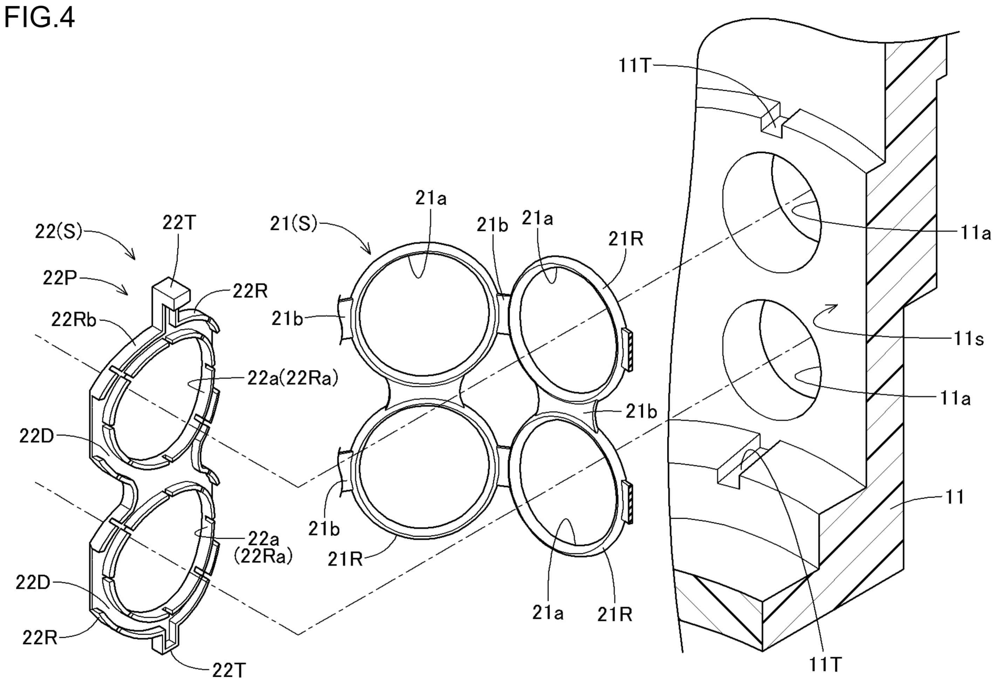

As illustrated in FIG. 3 and FIG. 4, a plurality of the first flow path openings 11a have a circular flow path cross-section, and the first flow path openings 11a are disposed in juxtaposition in a plurality of sections (in the present embodiment, eight sections) defined by equally dividing a circumferential region of the valve accommodation unit 11 in a circumferential direction (the circumferential direction when viewed along the axis X). The first flow path openings 11a are formed in juxtaposition in two vertically arranged tiers in a direction along the axis X. In some embodiments, the valve accommodation unit 11 can be configured, as illustrated in FIG. 2, to have the first flow path openings 11a formed in a region excluding some sections.

It should be noted that the first flow path openings 11a do not need to be formed in all of a plurality of the sections (eight sections) along the circumferential direction, and the first flow path openings 11a may be formed in only some of the eight sections defined by equally dividing the circumferential region in the circumferential direction into eighths. Similarly, the number of sections defined by dividing along the circumferential direction is not limited to eight and may be any number.

### [Rotary valve: rotor]

The rotor 12 is generally cylindrical, rotated by driving force of the valve drive unit 13 about the axis X, and set to a given rotational position.

The rotor 12 includes a rotor body 12a that has an outer surface being cylindrical about the axis X and a rotor shaft 12b that is disposed coaxially with the axis X and rotates in conjunction with the rotor body 12a. The rotor body 12a is formed with a given thickness, and a plurality of second flow path openings 12c that penetrate through the rotor body 12a are formed in the rotor body 12a.

In the rotor body 12a, a partition wall for controlling a flow of the refrigerant fluid is formed inside in such a way that the refrigerant fluid flows between pre-selected ones among the second flow path openings 12c.

The second flow path openings 12c are formed in a plurality of sections defined by equally dividing a circumferential region of the rotor body 12a in a circumferential direction in such a way that the second flow path openings 12c communicate with the first flow path openings 11a formed in a plurality of sections (eight sections) of the valve accommodation unit 11 every time the rotor body 12a is rotated by a given angle. The number of the second flow path openings 12c in the circumferential direction may be any number.

The second flow path openings 12c are arranged in parallel in two tiers arranged in the direction along the axis X (in an up-and-down direction), or formed into a long hole or the like in the up-and-down direction. When the second flow path openings 12c are disposed in juxtaposition in two vertically arranged tiers, the flow of the refrigerant fluid between the two second flow path openings 12c in the two vertically arranged tiers can be individually controlled.

With this configuration, when the rotor 12 is set to a given rotational position, the rotor 12 can control the refrigerant fluid supplied from any one of the cylindrical ports 1 to flow into another one of the cylindrical ports 1.

### [Rotary valve: valve drive unit]

The valve drive unit 13 has a structure in which a drive unit 13a having an electric motor embedded inside is supported by a supporting plate 13b. The drive unit 13a includes a drive shaft that is coaxial with the axis X, and by fitting the drive shaft into the rotor shaft 12b (for example, by means of spline fitting), driving force of the electric motor is transmitted to the rotor shaft 12b, and the rotor 12 is set to the given rotational position.

### [Rotary valve: sealing object]

As illustrated in FIG. 2 to FIG. 5, a small gap is formed between the inner wall surface 11s of the valve accommodation unit 11 and an outer wall surface 12s of the rotor 12 (rotor body 12a), and the sealing object S is disposed in this gap in such a way as to fill in the gap. The sealing object S allows the rotor 12 to smoothly rotate while preventing leakage of the refrigerant fluid.

The sealing object S has a structure in which a first seal 21 that comes into contact with the inner wall surface 11s of the valve accommodation unit 11 is overlaid on a second seal 22 that comes into contact with the outer wall surface 12s of the rotor 12 (rotor body 12a). Specifically, ethylene propylene rubber (EPDM) that flexibly deforms is used for the first seal 21. The second seal 22 is supported unmovably in the circumferential direction about the axis X with respect to the valve accommodation unit 11, and an improved material for nylon 66 (PA66) that has a low friction coefficient and superior heat resistance is used for the second seal 22.

In the following description, a surface of the first seal 21 that comes into contact with the inner wall surface 11s of the valve accommodation unit 11 may be referred to as an outer surface while the opposite surface may be referred to as an inner surface. A surface of the second seal 22 that comes into contact with the inner surface of the first seal 21 may also be referred to as an outer surface while the opposite surface may be referred to as an inner surface.

As illustrated in FIG. 3 to FIG. 7, the first seal 21 includes: a plurality of first annular portions 21R including a plurality of first seal openings 21a that communicate with the first flow path openings 11a; and first connecting portions 21b that connect adjoining ones of the first annular portions 21R.

Since rubber (EPDM) is used for the first seal 21, as illustrated in FIG. 1 and FIG. 3, the first seal 21 is generally cylindrically formed about the axis X. In the first seal 21 generally cylindrically formed in this manner, the first annular portions 21R are disposed in a plurality of sections (eight sections) in a circumferential direction and formed in parallel in two tiers arranged in the up-and-down direction along the axis X, and the thin sheet-shaped first connecting portions 21b that is oriented in such a way as to extend vertically (up-and-down direction) and laterally are formed in such a way as to connect the first annular portions 21R.

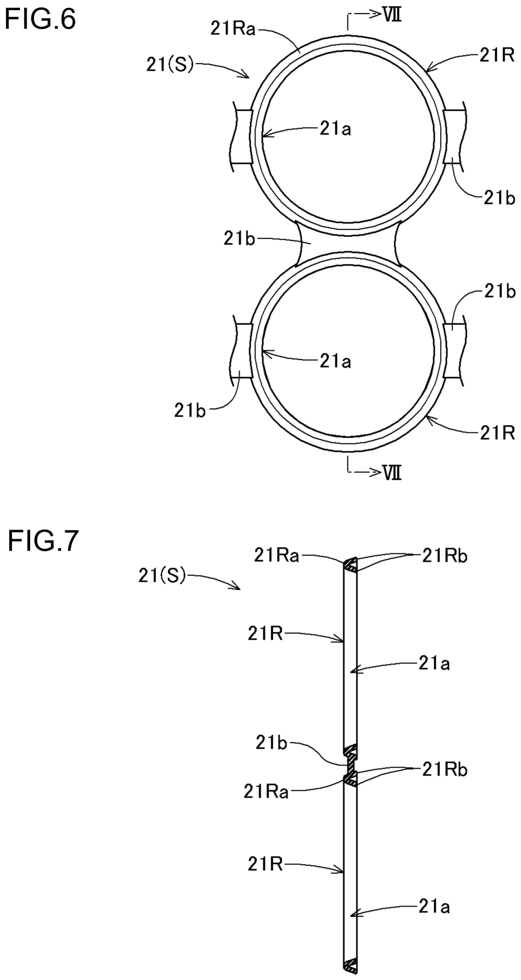

In the first seal 21, an inner diameter of each of the first seal openings 21a is substantially equal to a flow path diameter of the first flow path openings 11a. As illustrated in FIG. 5 and FIG. 7, in the first annular portions 21R, a proximal end 21Ra and a pair of lip portions 21Rb that protrude in a tapered shape in such a way as to branch from the proximal end 21Ra are individually annularly formed in a rim of the first seal openings 21a in an integrated manner. By forming a portion closer to a distal end to be narrower, each of a pair of the lip portions 21Rb can be easily deformed at the portion closer to the distal end. The number of the lip portions 21Rb may be single or three or more.

The first annular portion 21R is disposed, as illustrated in FIG. 5, in such a way that a pair of the lip portions 21Rb are in contact with an outer edge of the first flow path opening 11a in the inner wall surface 11s of the valve accommodation unit 11. The first seal 21 is overlaid on the second seal 22 in such a way that the first annular portions 21R of the first seal 21 are disposed in contact with second annular portions 22R of the second seal 22. Arrangement of the first seal 21 and second seal 22 when they are overlaid on each other is described later.

The first seal 21 is assumed to be produced by forming the entirety of the first annular portions 21R and the first connecting portions 21b that connect with the first annular portions 21R into a cylindrical form by using rubber (EPDM). The first seal 21 can be produced into a cylindrical shape by forming a sheet-shaped material in which the first annular portions 21R are connected by the first connecting portions 21b, deforming the sheet-shaped material into a cylindrical shape, and linking the first connecting portions 21b by bonding or welding.

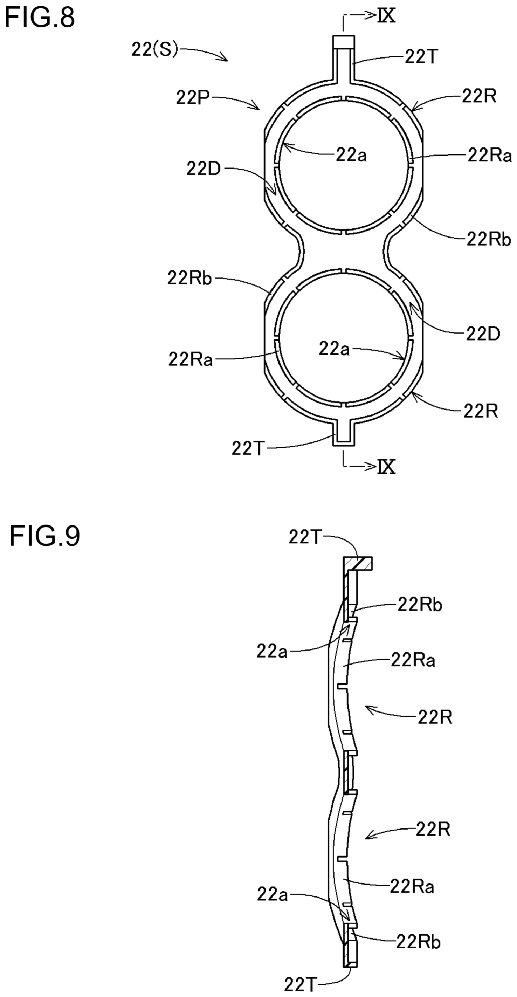

The second seal 22 is a structure divided into eight pieces in the circumferential direction of the valve accommodation unit 11, and the structure as illustrated in FIG. 4 and FIG. 8 is defined as a single piece 22P. In the present embodiment, each of the pieces 22P may be described as the second seal 22.

As illustrated in FIG. 3 to FIG. 5, FIG. 8, and FIG. 9, the second seal 22 includes second seal openings 22a that are formed in juxtaposition in two tiers arranged in the up-and-down direction along the axis X in such a way as to overlap with the first flow path openings 11a and the first seal openings 21a when the eight pieces 22P are disposed in the sections (eight sections) in the circumferential direction of the valve accommodation unit 11. The second seal 22 is used in a state in which the eight pieces 22P are arranged along an inner circumference of the first seal 21. The reason why the second seal 22 is divided into the eight pieces 22P is that a material such as nylon (PA66) has high stiffness and it is difficult to deflect the second seal 22 along the outer wall surface 12s of the rotor body 12a and the inner wall surface 11s of the valve accommodation unit 11.

Each of the pieces 22P includes a pair of the second annular portions 22R including second seal openings 22a that can communicate with the second flow path openings 12c in the rotor body 12a, the second seal openings 22a being arranged in juxtaposition in two tiers arranged in the up-and-down direction. In each of the pieces 22P, an engaging section 22T extending vertically is integrally formed at an upper end and a lower end in the direction along the axis X. In the present embodiment, the engaging sections 22T formed at the upper end of each of the pieces 22P has a shape bent in an L-shape when viewed in the circumferential direction.

For positioning each of the pieces 22P, in the valve accommodation unit 11, engaging recessed sections 11T are formed at upper end positions and lower end positions in the inner wall surface 11s.

An inner diameter of the second seal openings 22a in the pieces 22P (second seal 22) has a size substantially equal to that of the first seal openings 21a in the first seal 21. As illustrated in FIG. 4 and FIG. 9, in the second annular portion 22R, an inner protruding section 22Ra protruding toward the first seal 21 from a rim of the second seal opening 22a and an outer protruding section 22Rb protruding toward the first seal 21 from a rim of the second annular portion 22R are formed.

In each of the pieces 22P, both sides of the outer protruding section 22Rb in a lateral direction (the circumferential direction of the valve accommodation unit 11) are formed into a shape obtained by cutting out portions of the outer protruding section 22Rb linearly along the up-and-down direction. In addition, between the inner protruding section 22Ra and the outer protruding section 22Rb, an annular recessed section 22D is formed. The piece 22P according to the present embodiment include a pair of the second annular portions 22R arranged in juxtaposition in the up-and-down direction, and the recessed sections 22D of the second annular portions 22R are connected, and thus, the recessed section 22D having a substantially figure eight shape is formed in the piece 22P.

### [Rotary valve: arrangement of the sealing object]

In the sealing object S, the first seal 21 is disposed in contact with the inner wall surface 11s of the valve accommodation unit 11 in such a way that the first seal openings 21a communicate with the first flow path openings 11a while the pieces 22P (the second seal 22) are overlaid on the inner surface of the first seal 21 in such a way that the second seal openings 22a communicate with the first flow path openings 11a and the first seal openings 21a. In other words, the sealing object S is disposed between the inner wall surface 11s of the valve accommodation unit 11 and the outer wall surface 12s of the rotor 12.

In the sealing object S, the outer surfaces of the pieces 22P (second seal 22) are brought into contact with the inner surface of the first seal 21, and the engaging sections 22T at the upper end and the lower end of each of the pieces 22P is inserted into the engaging recessed sections 11T in the inner wall surface 11s of the valve accommodation unit 11. With this configuration, each of the pieces 22P is supported unmovably in the circumferential direction with respect to the valve accommodation unit 11.

As illustrated in FIG. 5, since the sealing object S is sandwiched between the outer wall surface 12s of the rotor body 12a and the inner wall surface 11s of the valve accommodation unit 11, the first seal 21 and the second seal 22 are slightly compressed in a direction in which they are overlaid. Due to this compression, the outer surface of the first seal 21 comes into close contact with the inner wall surface 11s of the valve accommodation unit 11 and the inner surface of the pieces 22P (second seal 22) comes into close contact with the outer wall surface 12s of the rotor 12.

When the sealing object S is arranged in this manner, a pair of the lip portions 21Rb in the outer surface of the first seal 21 come into contact with the outer edge of the first flow path opening 11a in the inner wall surface 11s of the valve accommodation unit 11 and thus, the lip portions 21Rb are elastically deformed. Reaction force associated with this elastic deformation acts in a radial direction (a direction perpendicular to the circumferential direction) of the inner wall surface 11s of the valve accommodation unit 11. It should be noted that the second seal 22 is slightly elastically deformed due to an action of the reaction force since stiffness of the second seal is higher than that of the first seal 21.

In the sealing object S, due to the action of the reaction force associated with the elastic deformation of a pair of the lip portions 21Rb, the proximal end 21Ra of the first annular portion 21R is press-fit into the recessed section 22D between the inner protruding section 22Ra and the outer protruding section 22Rb of the piece 22P (second seal 22). The first annular portion 21R of the first seal 21 engages with the second annular portion 22R of the second seal 22 in this manner and displacement of the first seal 21 relative to the second seal 22 is reduced.

The rubber (EPDM) used for the first seal 21 is an elastically deformable material. Therefore, as illustrated in FIG. 5, even when the first annular portion 21R of the first seal 21 are in engagement with the second annular portion 22R of the piece 22P (second seal 22), small displacement of the first seal 21 relative to the piece 22P (second seal 22) is allowed.

For this reason, even when external force associated with rotation of the rotor 12 acts on the sealing object S or force generated due to difference among thermal expansion coefficients of the valve accommodation unit 11, the first seal 21, and the second seal 22 as the temperature of the refrigerant fluid increases acts on the valve accommodation unit 11, the first seal 21, and the second seal 22, a positional relation between the first seal 21 and the pieces 22P (second seal 22) remains to be stable thanks to the small relative displacement.

The rotary valve 2 including the sealing object S allows the rotor 12 to smoothly rotate since the inner surfaces of the pieces 22P (second seal 22) having a low friction coefficient come into contact with the outer wall surface 12s of the rotor 12.

### [Advantageous effects of the present embodiment]

For example, in a case that a flexibly deformable material having a low friction coefficient and superior heat resistance is developed, even when the material is expensive, a rotary valve having good sealing performance can be constructed without increasing the cost by constructing the sealing object S by using the material for forming a part, when not the whole, of the sealing object S as described in the embodiment above.

The sealing object S has a structure in which the first seal 21 for which flexibly deformable ethylene propylene rubber (EPDM) is used and the second seal 22 for which an improved material for nylon 66 (PA66) achieving higher stiffness than the first seal 21 but having a low friction coefficient and superior heat resistance is used. Therefore, by utilizing the sealing performance enabled by flexible deformation of the first seal 21 and thanks to the low friction coefficient of the second seal 22, the sealing object S allows the rotor 12 to smoothly rotate when the rotor 12 rotates.

With the engaging sections 22T formed in each of the pieces 22P engaged with the engaging recessed sections 11T of the valve accommodation unit 11, the position of the second seal 22 in the circumferential direction is fixed and the position of the second seal 22 relative to the inner wall surface 11s of the valve accommodation unit 11 is fixed. In addition, as illustrated in FIG. 2, since the engaging sections 22T formed at the upper end has a shape bent in an L-shape and a packing 9 is in contact with upper surfaces of the engaging sections 22T, each of the pieces 22P is not movable in the direction (vertical direction) along the axis X.

The second seal 22 is divided into a plurality of the pieces 22P, and the pieces 22P provided as a result of division in this manner are arranged in juxtaposition along the inner wall surface 11s of the valve accommodation unit 11 in the circumferential direction. Therefore, even when the pieces 22P of the second seal 22 are made of a material having high stiffness, these pieces can be easily arranged along the inner wall surface 11s of the valve accommodation unit 11. In addition, since each of the pieces 22P can be individually displaced relative to the first seal 21, followability of the second seal 22 to the rotor 12 improves.

In the sealing object S, the lip portions 21Rb come into close contact with the inner wall surface 11s of the valve accommodation unit 11 and generate the reaction force associated with the elastic deformation, and this reaction force cause the proximal end 21Ra of the first seal 21 to engage with the recessed section 22D in the pieces 22P of the second seal 22. Consequently, the first seal 21 comes into close contact with the inner wall surface 11s of the valve accommodation unit 11 and the inner surfaces of the pieces 22P of the second seal 22 come into close contact with the outer wall surface 12s of the rotor 12, and a good sealing condition is achieved. In other words, the sealing object S allows the first flow path openings 11a in the valve accommodation unit 11, the first seal openings 21a in the first seal 21, and the second seal openings 22a in the second seal 22 to remain in a state in which they communicate with each other.

As described above, the first seal 21 and the second seal 22 are integrated in a state in which the proximal end 21Ra engages with the recessed section 22D due to the reaction force associated with the elastic deformation of the lip portions 21Rb, and therefore, the sealing object S does not require a process of bonding or the like for integrating the first seal 21 and the second seal 22. In addition, in the sealing object S, since the first seal 21 is integrated with the second seal 22 having high stiffness, even when pressure applied to the refrigerant fluid increases, the pieces 22P of the second seal 22 restrict deflection of the first seal 21.

More specifically, since the sealing object S has a structure in which the lip portions 21Rb formed at each of the first seal openings 21a in the first seal 21 are elastically deformed, for example, when a thickness of the first seal 21 varies in the circumferential direction, or when thicknesses of pieces 22P of the second seal 22 vary, elastic deformation amounts of the lip portions 21Rb vary and this smooths variations in the thicknesses, and thus, the sealing performance of the valve accommodation unit 11 in the circumferential direction can be equalized.

### [Alternative embodiments]

This disclosure may be implemented not only as in the embodiment described above, but with a configuration to be described below (note that a component having the same function as that in the embodiment described above is assigned with the same reference numeral or sign).
(a) The number of the first flow path openings 11a in the circumferential direction formed in the valve accommodation unit 11 is set to any given number. In addition, the first flow path openings 11a may be formed in the direction along the axis X in only one tier or in three or more tiers in parallel. Similarly, the number of tiers of the second flow path openings 12c formed in the rotor 12 is not limited to two tiers in the up-and-down direction, but may be only one tier in the up-and-down direction or three or more tiers in parallel in the up-and-down direction.
(b) In the sealing object S, the number of the first seal openings 21a and the number of the second seal openings 22a in the circumferential direction may be set to any number according to specifications. In addition, the first flow path openings 11a, the second flow path openings 12c, the first seal openings 21a, and the second seal openings 22a may be formed in such a way that shapes of flow path cross-sections are, instead of circular shapes, for example, rectangular shapes such as a square shape, or non-circular shapes such as a trapezoidal shape.
(c) Any material may be used for the first seal 21 and the second seal 22 instead of the materials described in the embodiment above. In addition, the sealing object S may be constructed of three or more members, and any material may be used for those members. It should be noted that an elastically deformable material is preferably used for the first seal 21 in the light of improving the sealing performance and a material having a low friction coefficient and high heat resistance is preferably used for the second seal 22 in the light of improving heat resistance and reducing a friction against the rotor 12.
(d) The recessed section 22D formed in the second seal 22 does not need to be annular, and the recessed section 22D may be, for example, formed as a plurality of dents. In this case, a plurality of protrusions are formed and arranged in such a way as to match the recessed sections 22D. When the sealing object S is used in a state in which the first seal 21 is overlaid on the second seal 22 as described in the embodiment above, the first seal 21 and the second seal 22 may be integrated by bonding them.
(e) In the second seal 22, a single piece 22P is constructed with a structure in which, for example, two or more second seal openings 22a are arranged in the circumferential direction. By constructing the second seal 22 in this manner, the second seal 22 can be constructed of a fewer number of pieces 22P compared to the embodiment described above.
(f) When producing the pieces 22P of the second seal 22, the pieces 22P are formed into a curved shape in advance. By forming the pieces 22P into such a shape, even when a material having high stiffness is used, the inner surface of the pieces 22P can be brought into close contact with the outer wall surface 12s of the rotor 12.
(g) The number of the pieces 22P composing the second seal 22 is not limited to eight. The second seal 22 just needs to be constructed of at least two pieces 22P.

Note that the configurations disclosed in the embodiments described above (including the alternative embodiments, which also applies in the following) may be combined with the configuration disclosed in another embodiment and that the embodiments disclosed in the present description are merely exemplary and embodiments of this disclosure are not limited to those embodiments, and modifications may be appropriately made to those embodiments without departing from the purpose of this disclosure.

In the embodiments that have been described above, configurations to be described below are conceived.
(1) A rotary valve 2, including: a housing 10 in which a valve accommodation unit 11 being cylindrical about an axis X is formed; a rotor 12 being housed rotatably about the axis X in the valve accommodation unit 11; and a sealing object S being disposed between an inner wall surface 11s of the valve accommodation unit 11 and an outer wall surface 12s of the rotor 12, wherein a plurality of first flow path openings 11a are formed in the inner wall surface 11s and a plurality of second flow path openings 12c that can communicate with the first flow path openings 11a are formed in the outer wall surface 12s, the sealing object S has a structure in which a first seal 21 is overlaid on a second seal 22, the first seal 21 including first seal openings 21a that communicate with a plurality of the first flow path openings 11a and being disposed in such a way as to be in contact with the inner wall surface 11s, the second seal 22 including second seal openings 22a that overlap with a plurality of the first seal openings 21a and being disposed in such a way as to be in contact with the outer wall surface 12s of the rotor 12, and the second seal 22 is divided into a plurality of pieces 22P in a circumferential direction about the axis X and each of the pieces 22P is supported unmovably with respect to the inner wall surface 11s.

With this rotary valve 2, since the sealing object S has a structure in which the first seal 21 is overlaid on the second seal 22, for example, a material having a small friction coefficient may be used for the second seal 22, and for example, a material that can be sufficiently elastically deformed may be used for the first seal 21 even when a friction coefficient of the material is not smaller than that of the material used for the second seal 22. In this configuration, by elastically deforming and causing the first seal 21 to come into close contact with the inner wall surface 11s of the valve accommodation unit 11, the second seal 22 can be brought into close contact with the outer wall surface 12s of the rotor 12 by using reaction force associated with this elastic deformation. In addition, in this configuration, the first seal 21 and the second seal 22 can be brought into close contact while keeping a state in which the first seal openings 21a in the first seal 21 communicate with the second seal openings 22a in the second seal 22. In particular, since the second seal 22 is divided into a plurality of pieces 22P in the circumferential direction of the valve accommodation unit 11 and each of the pieces 22P is supported unmovably with respect to the inner wall surface 11s of the valve accommodation unit 11, irrespective of the material used for the second seal 22, the second seal 22 can be easily brought into close contact with the outer wall surface 12s of the rotor 12, and it becomes easy to keep a state in which the first flow path openings 11a in the valve accommodation unit 11 communicate with the first seal openings 21a in the first seal 21 and the second seal openings 22a in the pieces 22P. Therefore, even when various types of materials are used for the sealing object S, sealing performance can be secured.

(2) In the rotary valve 2 according to (1), a plurality of the first flow path openings 11a may be formed in the inner wall surface 11s in juxtaposition in a direction along the axis X, a plurality of the second flow path openings 12c may be formed in the outer wall surface 12s in juxtaposition in the direction along the axis X, and the pieces 22P may include the second seal openings 22a that are arranged in juxtaposition in the direction along the axis X in such a way as to overlap with the first flow path openings 11a.

With this rotary valve 2, the first flow path openings 11a in the valve accommodation unit 11, the second flow path openings 12c in the rotor 12, and the second seal openings 22a in the pieces 22P are formed in juxtaposition in the direction along the axis X, and by causing these openings to communicate with each other, the flow of the refrigerant fluid can be controlled.

(3) In the rotary valve 2 according to (1) or (2), the first seal 21 may include lip portions 21Rb that are formed in a rim of the first seal openings 21a and in contact with the inner wall surface 11s of the valve accommodation unit 11, and the second seal 22 may include a recessed section 22D into which proximal ends 21Ra of the lip portions 21Rb are inserted as a section that faces against the lip portions 21Rb of the first seal 21.

With this rotary valve 2, in the sealing object S, the first seal 21 can be integrated with the second seal 22 by inserting the proximal end 21Ra into the recessed section 22D of the second seal 22 in a state in which the lip portions 21Rb of the first seal 21 is brought into contact with the inner wall surface 11s of the valve accommodation unit 11.

(4) In the rotary valve 2 according to any one of (1) to (3), the second seal 22 may include an engaging section 22T at at least one end in the direction along the axis X, and the inner wall surface 11s may include engaging recessed sections 11T that engage with the engaging sections 22T.

With this rotary valve 2, when using the second seal 22, by engaging the engaging section 22T formed in each of the pieces 22P with the engaging recessed section 11T of the valve accommodation unit 11, the positions of the pieces 22P in the circumferential direction of the valve accommodation unit 11 are fixed. In addition, since the second seal 22 is positioned in such a way as to be overlaid on the first seal 21, the position of the first seal 21 with respect to the valve accommodation unit 11 can be appropriately kept.

### INDUSTRIAL APPLICABILITY

This disclosure can be used for a rotary valve.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A rotary valve (2) comprising:
a housing (10) in which a valve accommodation unit (11) being cylindrical about an axis (X) is formed;
a rotor (12) being housed rotatably about the axis (X) in the valve accommodation unit (11); and
a sealing object (S) being disposed between an inner wall surface (11s) of the valve accommodation unit (11) and an outer wall surface (12s) of the rotor (12), wherein
a plurality of first flow path openings (11a) are formed in the inner wall surface (11s) and a plurality of second flow path openings (12c) that can communicate with the first flow path openings (11a) are formed in the outer wall surface (12s),
the sealing object (S) has a structure in which a first seal (21) is overlaid on a second seal (22), the first seal (21) including first seal openings (21a) that communicate with a plurality of the first flow path openings (11a) and being disposed in such a way as to be in contact with the inner wall surface (11s), the second seal (22) including second seal openings (22a) that overlap with a plurality of the first seal openings (21a) and being disposed in such a way as to be in contact with the outer wall surface (12s) of the rotor (12),
the second seal (22) is divided into a plurality of pieces (22P) in a circumferential direction about the axis (X), and
each of the pieces (22P) is supported unmovably with respect to the inner wall surface (11s).

2. The rotary valve (2) according to Claim 1, wherein
a plurality of the first flow path openings (11a) are formed in the inner wall surface (11s) in juxtaposition in a direction along the axis (X),
a plurality of the second flow path openings (12c) are formed in the outer wall surface (12s) in juxtaposition in the direction along the axis (X), and
the pieces (22P) include the second seal openings (22a) that are arranged in juxtaposition in the direction along the axis (X) in such a way as to overlap with the first flow path openings (11a).

3. The rotary valve (2) according to Claim 1 or 2, wherein
the first seal (21) includes a lip portion (21Rb) that is formed in a rim of the first seal openings (21a) and in contact with the inner wall surface (11s) of the valve accommodation unit (11), and
the second seal (22) includes a recessed section (22D) as a section that faces against the lip portion (21Rb) of the first seal (21) and into which a proximal end (21Ra) of the lip portion (21Rb) is inserted.

4. The rotary valve (2) according to any one of Claims 1 to 3, wherein
the second seal includes an engaging section (22T) at at least one end in a direction along the axis (X), and the inner wall surface (11s) includes an engaging recessed section (11T) that engages with the engaging section (22T).
